# EUROPEAN PATENT APPLICATION

(11) **EP 1 317 989 A1**
(43) Date of publication of application: **11.06.2003**
(21) Application number: 02027324.9
(22) Date of filing: 06.12.2002
(51) Int. Cl.: B23K 20/04, C21D 8/02, B21B 1/38

(54) **Laminated tool steel material and process for producing such tool steel material**

(30) Priority: 06.12.2001 JP 2001372117
(71) Applicant: HITACHI METALS, LTD., Minato.ku, Tokyo 105-8614 (JP)
(72) Inventor: Muroshige, Masashi, Amagasaki-shi, Hyogo, 661-0953 (JP); Hukumoto, Shiho, Yasugi-shi, Shimane, 692-0014 (JP)
(74) Representative: Strehl Schübel-Hopf & Partner

(57) **Abstract**

A tool steel material is capable of having its carbides sufficiently fined in microstructure and also capable of reducing segregation of any of its constituent elements to the smallest possible amount in the material. In producing the material, a plurality of cast steel pieces are prepared and stacked to form a lamination pack. This lamination pack is then subjected to a hot-working process under pressure. As a result, the cast steel pieces of the pack are press-bonded to each other and unified. During this press-bonding process, the pack is also subjected to a diffusion heat treatment for enhancing diffusion of the elements of the material by permitting the elements to pass through a contact surface of each of the cast steel pieces, through which contact surface adjacent ones of the cast steel pieces are brought into contact with each other in the lamination pack.

## Description

### BACKGROUND OF THE INVENTION

### 1. Field of the Invention

The present invention relates to a method for producing a laminated and pressure-hot-worked tool steel material at low cost and also relates to the tool steel material thus produced, wherein the method and the material are capable of realizing a microstructure of fine carbides in the material and also capable of reducing segregation of any of constituent elements of the material to the smallest possible amount in the material.

### 2. Description of the Related Art

As for a grain size of a carbide contained in various types of cast steels which are identical with each other in the carbon content and also in any one of alloy element contents of the steels: the grain size of the carbide is substantially dependent on a cooling speed of each cast steel when the steel having been molten is cast. Consequently, in order to fine the grain side of carbides of the cast steel, it is necessary to increase the cooling speed of the steel thus cast, which in turn requires the cast steel to be reduced in size (i.e., in order to reduce the cast steel in its thermal capacity).

When the cooling speed is increased in casting the steel, a difference in solidification speed between the interior of the cast steel and an outer shell of the cast steel is correspondingly reduced so that the segregation of any of the carbides, alloy elements and impurities contained in the cast steel is also correspondingly reduced. Consequently, in order to obtain a steel material capable of sufficiently reducing the segregation of any of the carbides, alloy elements and impurities, it is necessary to sufficiently fine the grain size and also necessary to sufficiently increase the cooing speed of the cast steel by reducing the size (i.e., thermal capacity) of the cast steel. This is particularly true as to a high-carbon high-alloy element cast steels such as a high speed tool steel and the like.

On the other hand, it is possible to reduce the segregation of the cast steel by increasing a forging ratio of the cast steel, where: the forging ratio is defined as a ratio in cross section of the cast steel having still not been subjected to any forging process to the cast steel having been already subjected to the forging process. Consequently, in order to sufficiently increase the forging ratio of the cast steel, it is necessary to sufficiently increase the size of the cast steel, which makes it substantially impossible to increase the cooling speed of the cast steel due to a large thermal capacity of the thus large-sized cast steel. In other words, in reducing the segregation of the cast steel, there is a contradiction in conditions between two requirements: one for an increase in cooling speed of the cast steel, which is realized by reducing the size of the cast steel; and, the other for an increase in forging ratio of the cast steel, which is realized by increasing the size of the cast steel. As is clear from the above, the contradiction incurs in conditions between the former and the latter requirement as to the size of the cast steel. When both the requirements described above are satisfied, it is impossible for the prior art to obtain a large-sized steel material or steel product.

Further, in a conventional method for producing a high speed tool steel: metal powders for a high speed tool steel excellent in cooling speed are first prepared; and, the thus prepared metal powders are mixed, shaped, sintered and hot-worked into a high speed tool steel product, as is well-known in the prior art called "powder metallurgy techniques". However, the conventional method for producing the high speed tool steel product is disadvantageous in its expensive manufacturing cost.

### SUMMARY OF THE INVENTION

Under such circumstances, the present invention was made to solve the problems of expensive manufacturing cost inherent in the prior art. Consequently, it is an object of the present invention to provide a laminated and pressure-hot-worked tool steel material at low cost and the tool steel material thus produced, wherein the method and the material are capable of realizing a microstructure of fine carbides in the material and also capable of reducing segregation of any of constituent elements of the material to the smallest possible amount in the material, wherein the method of the present invention uses a plurality of pieces of conventional cast steel which is produced at low cost, but not uses the powder metallurgy techniques, which are expensive and therefore not economical.

In accordance with a first aspect of the present invention, the above object of the present invention is accomplished by providing:
A method for producing a tool steel material comprising the steps of:
   stacking a plurality of cast steel pieces into a lamination pack; and
   processing the lamination pack by a pressure-hot-working process to have the cast steel pieces press-bonded to each other and unified in the lamination pack.

In the method of the present invention has the above construction, since the plurality of the cast steel pieces are stacked, heated, press-bonded to each other and unified to form the desired tool steel material of the present invention, the following advantages may be obtained:
① in manufacturing the desired tool steel material, it is possible for the present invention to use a plurality of pieces of a conventional low-cost cast steel, wherein: the grain size of carbides contained in the cast steel is sufficiently fined in microstructure when molten state of the cast steel is cooled in a mold at a large cooling speed in a casting operation of the cast steel; and, at the same time, segregation of any of constituent elements of the cast steel is reduced to the smallest possible amount in such a casting operation due to the above-mentioned large cooling speed of the cast steel;
② the tool steel material of the present invention thus obtained may be further subjected to: a first forging operation, which is performed at a first forging ratio in preparing the pieces of the cast steel; and, a second forging operation, which is performed at a second forging ratio at elevated temperature in press-bonding the pieces of the cast steel to each other and unifying these pieces in the lamination pack, wherein: since the sum of the first and the second forging ratio is a sufficiently large number, it is possible for the present invention to sufficiently fine the grain size of the carbides, non-metallic compounds or impurities and the like all contained in the tool steel material of the present invention which is also improved in segregation of any of its constituent elements of the tool steel material;
③ particularly, in the case of the free-cutting steel a sulfur content of which is large, any one of sulfur compounds or sulfides contained in the steel is finely broken in grain size and sufficiently diffused in the microstructure of the steel, which makes it possible for the present invention to improve the free-cutting steel in both cutting ability and lubricating ability without impairing its toughness; and
④ further, in the method of the present invention, it is possible to increase an available size of the tool steel material of the present invention by simply increasing the number of plies (i.e., pieces) of the cast steel in preparing the lamination pack in which the plies or pieces of cast steel are stacked into a neat pile, where: the tool steel material comprises a carbon steel, a carbon content of which ranges from 0.1 mass % to 2.0 mass %, and, any other alloyed steel containing Cr, Mo, W, V and like alloying elements, for example such as ones specified in JIS (Japanese Industrial Standards), which comprises a carbon tool steel, an alloyed tool steels, a high speed tool steel and like steels; and, the pieces of the cast steel are defined as any ones of ingots, blooms, billets, slabs and like steels produced by using an ingot molding process, a continuous steel casting process and/or a hot- or a cold- rolling process. The method of the present invention comprises the pressure-hot-working process, which may be performed by using a press machine and/or a powered hammer. It is also possible to perform the pressure-hot-working process by using a hot- or a cold rolling machine or plant.

In the method of the present invention having the above construction, preferably: the number of the cast steel pieces in the lamination pack is equal to or more than 5; and, a forging ratio of the lamination pack to a product of the tool steel material is equal to or more than 20. This makes it possible for the method of the present invention to obtain a sufficiently large forging ratio of the tool steel material produced by the method in total. Such a large forging ratio may reduce the segregation of any of constituent elements of the tool steel material to the smallest possible amount. In this connection, when the total forging ratio of the tool steel material or steel product is equal to or less than 20, it is impossible to reduce the segregation to the smallest possible amount. In order to sufficiently reduce the segregation in each piece of the cast steel, it is preferable for the method of the present invention to increase the number of the pieces of the cast steel contained in the lamination pack. Due to this, the number of the pieces of the cast steel should be equal to or more than 5, preferably, equal to or more than 10.

Further, in the method of the present invention, preferably: the number of the pressure-hot-working processes, to each of which the lamination pack is subjected, is equal to or more than 2; and, a heat treatment for enhancing diffusion of constituent elements of the tool steel material is conducted between adjacent ones of these pressure-hot-working processes, wherein the heat treatment enables the constituent elements of the cast steel pieces to pass through a contact surface of each of the cast steel pieces and diffuse throughout the lamination pack, adjacent ones of the cast steel pieces being brought into contact with each other through the contact surface in the lamination pack. Such diffusion of the constituent elements of the cast steel pieces passing through the contact surfaces enhances unification of the cast steel pieces in quality in the lamination pack.

Preferably, in the method of the present invention, a sulfur content of the tool steel material is more than 0.03 mass % since the method of the present invention is remarkable in effect when the sulfur content of the tool steel material is more than 0.03 mass %. In contrast with this, a tool steel specified in JIS has its sulfur content limited up to a value equal to or less than 0.03 mass % in order to prevent the tool steel from deteriorating in brittleness at elevated temperature. However, in the case of the free-cutting steel, in order to improve the fee-cutting steel in cutting ability and also in lubricating ability thereof, a sulfur content of the fee-cutting steel often exceeds 0.03 mass %. In this connection, it is preferable for the free-cutting steel to have its sulfur compounds or sulfides sufficiently fined in grain size and uniformly diffused in the steel. In the case of an as-cast free-cutting steel, the grain size of the sulfides and like impurities contained in the steel remains coarse. Due to such coarse grain size, the as-cast fee-cutting steel is considerably impaired in brittleness. In contrast with this, in the method of the present invention, since the sulfides of the as-cast free-cutting steel are sufficiently fined in grain size and uniformly diffused in the microstructure of the steel under the influence of the pressure-hot-working process, it is possible for the method of the present invention to improve the as-cast free-cutting steel in its cutting ability and lubricating ability thereof without impairing the free-cutting steel in brittleness. The method of the present invention is most effective in the case of the tool steel material a sulfur content of which is equal to or more than 0.05 mass %.

In the method of the present invention, preferably each of the cast steel pieces of the lamination pack is constructed of a piece of a steel strip having continuously been cast by a continuous steel casting process. Since the cooling speed of a steel strip cast in the continuous steel casting process is considerably large when a thickness of the thus cast steel strip is relatively small, it is possible to obtain the cast steel, which has been small in grain size of the carbides and has reduced the segregation of its constituent elements to the smallest possible amount. Consequently, by simply stacking a plurality of pieces of such cast steel to form a lamination pack, it is possible for the method of the present invention to obtain the lamination pack, which is sufficiently fined in grain size of the carbides as a whole and also sufficiently reduced in segregation as a whole. In this case, each piece of the cast steel may be constructed of a piece of an as-cast steel. It is also possible to hot-roll or cold-roll the piece of the as-cast steel before it is stacked together with the remaining pieces of the as-cast steel to form the lamination pack.

In the method of the present invention, preferably the tool steel material of the present invention is a high speed tool steel since the method of the present invention is more effective in the case of the high speed tool steel, which is a high-carbon high-alloyed steel and therefore tends to have a coarse grain size of carbides and also tends to incur the segregation problem in the prior art. The method of the present invention is capable of solving the problem of the coarse grain size of the carbides and the segregation problem. Consequently, it is possible for the method of the present invention to provide the desired tool steel material excellent in both toughness and machining or cutting ability,
wherein the tool steel material is produced at low cost according to the method of the present invention relative to the sintered tool steel produced by the conventional powder metallurgy techniques which is expensive.

In accordance with a second aspect of the present invention, the above object of the present invention is accomplished by providing:

A tool steel material produced by: stacking a plurality of cast steel pieces into a lamination pack; and, processing the lamination pack by a pressure-hot-working process to have the cast steel pieces press-bonded to each other and unified in the lamination pack.

In the tool steel material of the present invention having the above construction, preferably: the number of the cast steel pieces in the lamination pack is equal to or more than 5; and, a forging ratio of the lamination pack to a product of the tool steel material is equal to or more than 20.

Further, in the tool steel material of the present invention, preferably: the number of the pressure-hot-working processes, to which the lamination pack is subjected, is equal to or more than 2; and, a heat treatment for enhancing diffusion of constituent elements of the tool steel material is conducted between adjacent ones of these pressure-hot-working processes, wherein the heat treatment enables the constituent elements of the cast steel pieces to pass through a contact surface of each of the cast steel pieces and diffuse throughout the lamination pack, adjacent ones of the cast steel pieces being brought into contact with each other through the contact surface in the lamination pack.

Still further, in the tool steel material of the present invention, preferably a sulfur content in the tool steel material is more than 0.03 mass %.

In addition, preferably each of the cast steel pieces of the lamination pack is constructed of a piece of a steel strip having continuously been cast by a continuous steel casting process.

Further, in the tool steel material of the present invention, preferably the tool steel material is a high speed tool steel.

### BRIEF DESCRIPTION OF THE DRAWINGS

The above and other objects, advantages and features of the present invention will be more apparent from the following description taken in conjunction with the accompanying drawings in which:
Fig. 1 is a block diagram illustrating the sequence of a plurality of process steps forming an example 1 of the method of the present invention;
Fig. 2 is a bar graph of the defective strength (N/mm²) of each of samples of the high speed tool steel produced by the example 1 of the method of the present invention, illustrating the results of tests of the samples in comparison with the comparative samples;
Fig. 3 is a bar graph of the 10R Charpy impact value (J/cm²) of each of the samples of the high speed tool steel produced by the example 1 of the method of the present invention, illustrating the results of Charpy impact tests of the samples in comparison with the comparative samples;
Fig. 4 is a perspective view of a piece of a tool steel material produced by the example 1 of the method of the present invention, illustrating precise locations where the samples to be tested in the tests of Figs. 2 and 3 are obtained;
Fig. 5 is a photomicrograph of a sample (S60) obtained from a tool steel material sample "B" prepared from the lamination pack according to the example 1 of the method of the present invention;
Fig. 6 is a photomicrograph of a sample (S30) obtained from a tool steel material sample "C" prepared from the lamination pack according to the example 1 of the method of the present invention;
Fig. 7 is a photomicrograph of a comparative sample obtained from a sintered tool steel "E" which was prepared by the conventional powder metallurgy techniques and used in the tests of Figs. 2 and 3;
Fig. 8 is a photomicrograph of a comparative sample obtained from a cast steel "F" which was used in the tests of Figs. 2 and 3;
Fig. 9 is a block diagram illustrating the sequence of a plurality of process steps forming an example 2 of the method of the present invention;
Fig. 10 is a photomicrograph of a tool steel material prepared from the lamination pack according to the example 2 of the method of the present invention; and
Fig. 11 is a photomicrograph of a comparative sample obtained from a conventional tool steel material, which is used in comparison with the example 2 of the method of the present invention.

### DETAILED DESCRIPTION OF THE PREFERRED EMBODIMENTS

The best modes for carrying out the present invention will be described in detail using embodiments of the present invention with reference to the accompanying drawings.

### EMBODIMENTS

### EXAMPLE 1:

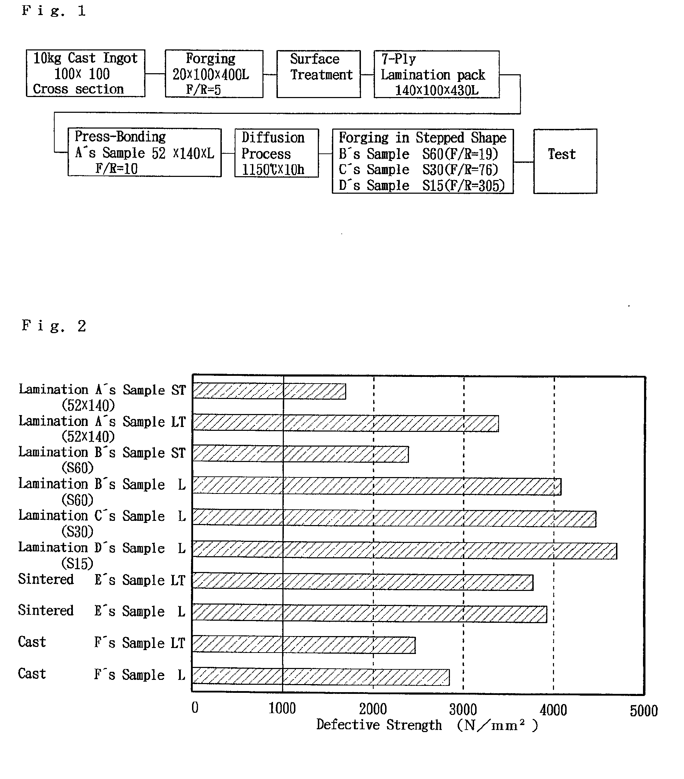

First, in order to confirm the effects of the method of the present invention by experiments, a sample 1 of cast steel having the following composition was prepared and used in a test shown in Fig. 1, which illustrates the sequence of a plurality of process steps forming an example 1 of the method of the present invention:

**Table 1:**

| Chemical Composition (mass %) | | | | | | | |
|---|---|---|---|---|---|---|---|
| Element | C | Cr | W | Mo | V | Co | Fe |
| Sample 1 | 1.30 | 4.00 | 6.00 | 5.00 | 3.00 | 8.00 | Balance |

As shown in Fig. 1, first, a piece of cast steel having the chemical composition shown in the above Table 1 and having a cross section of 100 x 100 (mm) square was experimentally cast. This piece of cast steel was then formed into a flat shape having a cross section of 20 x 100 (mm) by forging with a forging ratio of 5. The thus forged piece of cast steel was then polished in surface and cleaned. Then, a plurality of the thus polished and cleaned pieces of cast steel were stacked into a neat pile called a "lamination pack". In this example 1, the number of the pieces of cast steel was 7, so a 7-ply lamination pack having a cross section of 140 x 100 (mm) was obtained. This lamination pack was then subjected to a pressure-hot-working process in which: the lamination pack was first heated up to a temperature of 1150 °C and then hot-rolled into a unified block of cast steel having a cross section of 52 x 140 (mm). In this pressure-hot-working process, the plurality of the pieces of cast steel contained in the lamination pack were press-bonded with each other at elevated temperature and unified to form a unified block of cast steel which was a lamination sample "A". In this Example 1, a total forging ratio of the cast steel counted from the starting piece of the cast steel to the unified piece of the cast steel was 10. After that, the thus unified block of cast steel was heated again to a temperature of 150 °C and kept at this temperature for a period of 10 hours, so that the unified block of cast steel was subjected to a diffusion treatment.

After completion of such a diffusion treatment, the unified block of cast steel was forged into a 60 x 60 (mm) square shape in cross section, which shape was a lamination sample "B". At this time, a total forging ratio of the cast steel counted from the starting piece of the cast steel to the above 60 x 60 (mm) square shape was 19. When the unified block of cast steel was forged into a 30 x 30 (mm) square shape in cross section, which shape was a lamination sample "C", a total forging ratio of the cast steel counted from the starting piece of the cast steel to this 30 x 30 (mm) square shape was 76. Further, when the unified block of cast steel was forged into a 15 x 15 (mm) square shape in cross section, which shape was a lamination sample "D", a total forging ratio of the cast steel counted from the starting piece of the cast steel to this 15 x 15 (mm) square shape was 305.

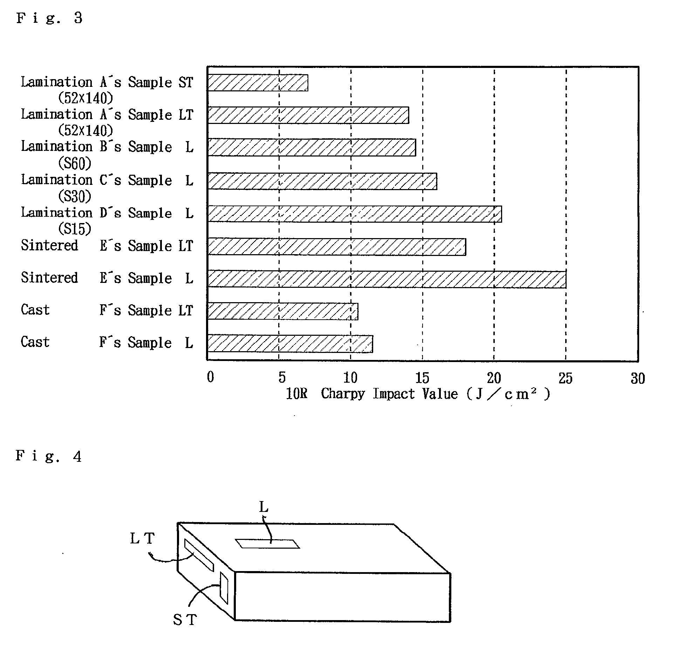

Since these lamination samples "A", "B", "C" and "D" were prepared from the lamination packs, they are called the "lamination samples" here. These lamination samples "A", "B", "C" and "D" were then compared in mechanical properties with each of a sintered high speed tool steel called a sintered steel sample "E" and a conventional cast steel sample "F", which samples "E" and "F" were used as comparative samples in the tests shown in Figs. 2 and 3. In this comparison, each of these lamination samples was hardened up to a hardness of 66 HRC by quenching before these tests. After that, the lamination samples were compared with each other and with the comparative samples in defective strength and also in 10R Charpy impact value in these tests. The results of this comparison are shown in the bar graphs of Figs. 2 and 3, in which: the reference letters "L", "LT" and "ST" indicate the locations where the lamination samples and the comparative samples were obtained from the piece of steel. For example, as is clear from Fig. 4: the reference letter "L" indicates that the sample "L" extended in the longitudinal direction of the pieced of steel; the reference letter "LT" indicates that the samples "LT" extended in the width direction of the pieced of steel; and, the reference letter "ST" indicates that the sample "ST" extended in the thickness direction of the pieced of steel. Incidentally, the piece of steel was forged and rolled in the longitudinal direction of the piece of steel, which longitudinal direction is denoted by the reference letter "L".

Although both the defective strength and the 10R Charpy impact value shown in Figs. 2 and 3 obtained from these tests indicate substantially the same tendency, a value of the sample "ST" of the lamination sample "A" having the cross section of a 52 x 140 (mm) with a forging ratio of 10 is approximately a half of a value of the sample "LT" of the same lamination sample "A". Due to this, it was found that the sample "ST" of the lamination sample "A" having the cross section of a 52 x 140 (mm) with a forging ratio of 10 was inadequate in mechanical properties. In contrast with this, the lamination sample "B" having the square cross section of 60 x 60 (mm) with a forging ratio of 19, its sample "ST" was improved in mechanical properties. As a result of the tests of these lamination samples, it has been found that, in order to improve the piece of the cast steel, the total forging ratio of the cast steel must be equal to or more than 20.

On the other hand, as is clear from the bar graph shown in Fig. 2, the defective strength of the sample "L" of each of the lamination samples "B", "C" and "D" was substantially comparable to those of the comparative samples of the sintered tool steel "E". As for the 10R Charpy impact value, as is clear from the bar graph shown in Fig. 3, the sample "L" of each of the lamination samples "B", "C" and "D" was slightly inferior to those of the comparative samples of the sintered tool steel "E", but superior to those values of the comparative samples "LT" and "L" of the cast steel "F".

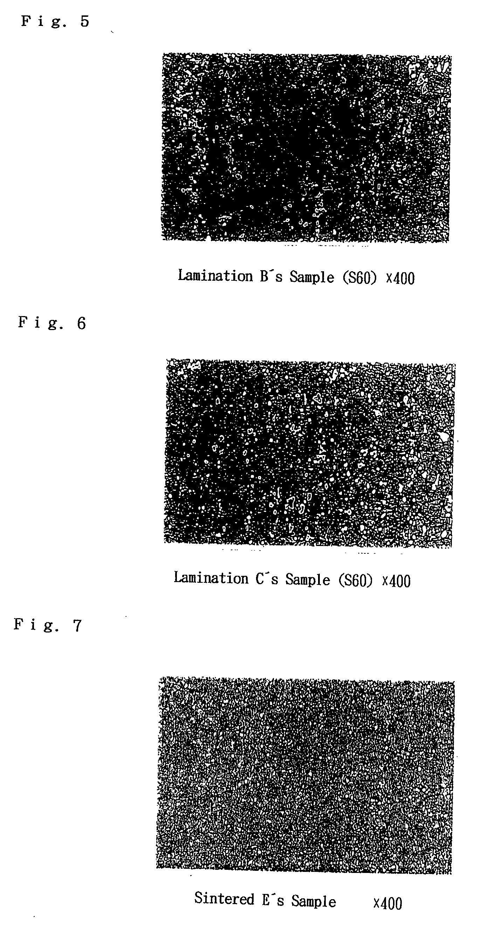

Figs. 5, 6 and 7 show photomicrographs the samples of the lamination samples "B" and "C", and the corresponding comparative samples of each of the sintered tool steel "E" and the cast steel "F". Each of the lamination samples "B" and "C", which are shown in Figs. 5 and 6, respectively, was slightly larger in grain size of carbides and also larger in segregation than each of the comparative samples "LT" and "L" of the sintered tool steel "E", but smaller in grain size than the comparative samples "LT" and "L" of the cast steel "F". Further, as for a strip-like segregation, each of the lamination samples "B" and "C", which are shown in Figs. 5 and 6, respectively, was improved. Of the individual samples obtained from the lamination sample "C", particularly, one having a large forging ratio in total was remarkably improved in grain size of the carbides and also improved in the strip-like segregation. The results of the above tests seem to prove that the grain size of the carbides contained in the sample "L" of each of the lamination samples "B", "C" and "D" makes this sample "L" inferior to each of the comparative samples "LT" and "L" of the sintered tool steel "E" in 10R Charpy impact value.

On the basis of the above test results, it has been found that the tool steel material produced using the lamination pack prepared by the method of the present invention may be remarkably improved in performance relative to the cast steel "F" and nearly approach the performance of the sintered tool steel "E". Due to these test results, the following experiment was conducted in an example 2 as to a large-sized cast steel.

### EXAMPLE 2:

In this example 2, an experiment was conducted using a large-sized cast steel made of the free-cutting tool steel having the following chemical composition:

**Table 2:**

| Chemical Composition of Sample 2 (mass %) | | | | | | | | | |
|---|---|---|---|---|---|---|---|---|---|
| | C | Si | Mn | P | S | Cr | Mo | V | Fe |
| Sample 2 | 0.37 | 1.05 | 0.60 | 0.020 | 0.15 | 5.12 | 1.25 | 0.80 | Balance |

More specifically, in this experiment: first, a cast steel rod having a diameter of 600 mm was prepared; the thus prepared cast steel rod was then forged and rolled into a cast steel strip having a cross section of 2.5 x 400 (mm); and, the strip was then cut into a plurality of cast steel pieces each having dimensions of 2.5 x 100 x 1500 (mm), wherein the number of the pieces was 100. After that, these 100 pieces of the cast steel were stacked into a neat pile called "lamination pack". The lamination pack was then rolled into a shape having a cross section of 100 x 100 square (mm), a total forging ratio of which shape counted from the starting cast steel to this shape was 2827. At the same time, a comparative sample was prepared from a steel having the same chemical composition as that of the shape, wherein a total forging ratio of the comparative sample was 9. Each of the sample and the comparative sample was then quenched and annealed so as to have a hardness of 39HRC, and observed by using an optical microscope as to sulfur compounds (i.e., sulfides such as MnS), and further examined through a 2U Charpy impact test. In addition, by using a drill press, a boring test was also conducted on each of the samples and the comparative samples each having quenched and rolled, so that the samples and the corresponding comparative samples were compared in cutting ability.

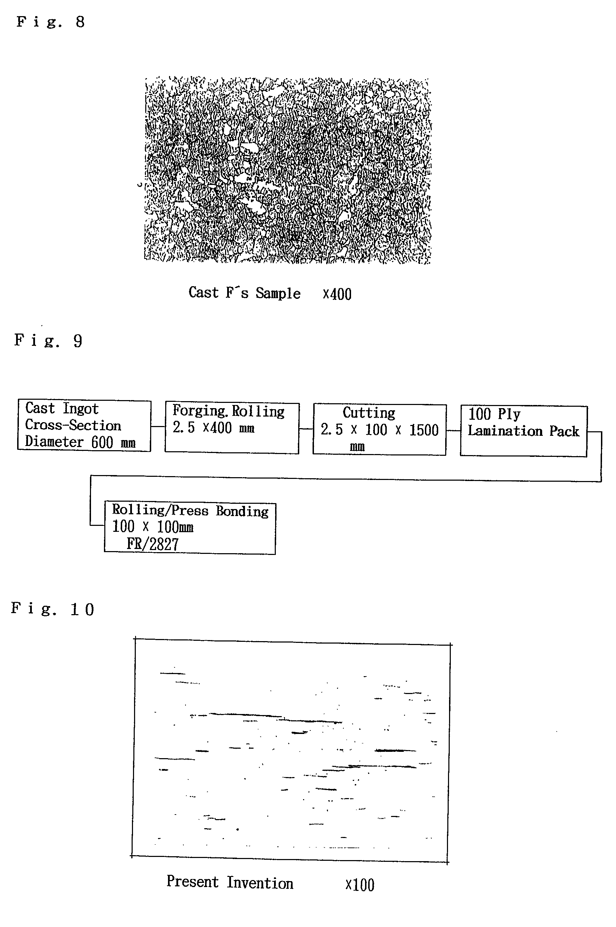

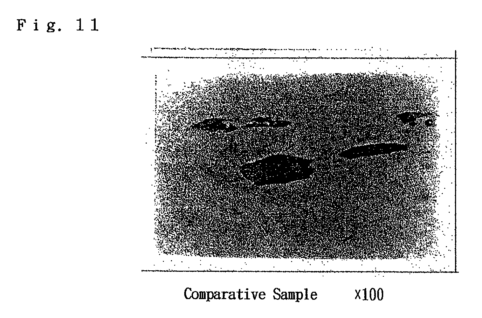

Figs. 10 and 11 are photomicrographs showing various types of impurities included in the lamination sample and the comparative sample, respectively. More specifically, the comparative sample shown in Fig. 11 has manganese sulfides (MnS) each having a large oval-shaped form. However, in the lamination sample of the present invention shown in Fig. 10, such impurities were transformed into a finely divided thin strip-like form since the lamination sample of the present invention having already been subjected to the pressure-hot-working process including the press-bonding process in which a considerably large mechanical pressure was applied to the lamination pack form which the lamination sample of the present invention was prepared.

The 2U Charpy impact values obtained in the above tests of the samples of the present invention and the corresponding comparative samples are shown in the following Table 3:

**TABLE 3:**

| 2U CHARPY IMPACT VALUE (MEAN VALUE PER THREE PIECES: J/cm²) | | |
|---|---|---|
| | Sample "L" | Sample "T" |
| Lamination Sample of the Invention | 30 | 11 |
| Comparative Sample | 24 | 11 |

The results of the boring tests conducted on these lamination sample of the present invention and the comparative sample by using the drill press are shown in the following Table 4:

**TABLE 4:**

| RESULTS OF THE BORING TESTS USING A DRILL PRESS | |
|---|---|
| | The number of boring Operations |
| Lamination Sample of the Invention | 40 |
| Comparative Sample | 21 |

where: a drill used in the boring tests was an HSS-Co alloy drill having a diameter of 4 mm; a rotating speed of the drill press using the above drill was 1592 rpm; a feed rate of the drill was 159.2 mm/minute; an exposed length of the drill was 55 mm; a depth of a bore formed by the drill was 40 mm; and, the number of the bores, which were formed by the drill before breakage of the drill, was counted for evaluation of each of the lamination sample of the present invention in comparison with the corresponding comparative sample.

As is clear from the Table 4, it is recognized that the lamination sample of the present invention may enjoy substantially double the number of the boring operations of the comparative sample. Consequently, it is clear that the method of the present invention is capable of remarkably improving the lamination sample (i.e., tool steel material of the present invention) in cutting ability and in toughness.

As described above, in the method of the present invention for producing the tool steel material using the lamination pack of a plurality of pieces of the cast steel, since the plurality of the pieces of cast steel having been stacked to each other in the lamination pack are press-bonded to each other at elevated temperature and unified to form a unified tool steel material of the present invention, it is possible for the method of the present invention to use the pieces of the cast steel, each of which pieces may be produced at low cost and has inherently been fined in grain size of carbides and reduced the segregation of elements and impurities to the smallest possible amount. Therefore, the method of the present invention is capable of producing a desired tool steel material at low cost even when the size of the desired tool steel material is considerably large, without increasing both the grain size and the segregation problem. This advantage of the method of the present invention essentially owes to a large total forging ratio of the desired tool steel material or steel product counted from the starting pieces of cast steel to the final steel product. Due to the presence of such a large total forging ratio, the method of the present invention is capable of effectively reducing both the grain size and the segregation in the steel product. Further, in the method of the present invention, only by simply increasing the number of the low-cost pieces of cast steel in the lamination pack, it is possible to produce a large-sized tool steel material through the pressure-hot-working process at low cost.

As for the pieces of cast steel from which the lamination pack is constructed, the pieces of the cast steel may be any ones of ingots, blooms, billets, slabs and like steels produced by using an ingot molding process, a continuous steel casting process and/or a hot- or a cold- rolling process. The pressure-hot-working process used in the method of the present invention may be performed by using a conventional press machine and/or a conventional powered hammer. It is also possible to perform the pressure-hot-working process by a hot- or a cold rolling machine of a conventional type.

In the method of the present invention, it is possible to increase a total forging ratio of the steel product or tool steel material of the present invention up to 20 or more, and therefore possible to sufficiently reduce the segregation and the grain size of the microstructure of the steel product.

Further, in the method of the present invention, by employing a diffusion process for diffusing the constituent elements of the pieces of cast steel throughout the lamination pack and interposing such a diffusion process between adjacent ones of a plurality of press-bonding processes each performed at elevated temperature, it is possible to further enhance the unification of the lamination pack in the pressure-hot-working process of the method of the present invention, so that the thus produced tool steel material of the present invention is excellent in cutting ability and in toughness.

Even in the case of the free-cutting steel a sulfur content of which often exceeds 0.03 mass %, the method of the present invention is effective in fining the grain size of any of sulfur compounds contained in the free-cutting steel, and also effective in diffusing such fined sulfur compounds since the method of the present invention mechanically presses and simultaneously heats the lamination pack of pieces of the free-cutting steel. Consequently, it is possible for the method of the present invention to improve even the free-cutting steel in cutting ability and lubricating ability without impairing its toughness. The method of the present invention is much more effective when a sulfur content of the steel is equal to or more than 0.05 mass %.

Further, as for a steel block constructed of a plurality of pieces of steel strip having been produced by the continuous steel casting process, each of the pieces of steel strip forming the steel block has been cast at a relatively large cooling speed. Due to such a large cooling speed, the carbides contained in each piece of steel strip has been sufficiently fined in grain size and the segregation of any of constituent elements of the steel strip has been reduced to the smallest possible amount in each of the pieces of steel strip. Consequently, it is possible to obtain a carbide-fined and segregation-reduced steel block by only stacking a plurality of the above-mentioned pieces of the steel strip. When the thus prepared steel block is subjected to the pressure-hot-working process according to the method of the present invention, the grain size of the fined carbides contained in the steel block is further down-sized in microstructure, and the reduced amount of segregation of the steel block is further reduced. In the method of the present invention, each of the pieces of the steel strip may be constructed of a plurality of pieces of as-cast steel strip. Further, it is also possible to have such an as-cast pieces of steel strip subjected to a hot- or a cold- rolling operation for preparing a steel plate which is adapted to be stacked into a lamination pack.

Further, the method of the present invention is much more effective in manufacturing a high-alloy high speed tool steel in which the gain size of its carbides tends to increase and the segregation of any of its constituent elements tends to become larger. Since the method of the present invention is capable of sufficiently fining the grain size of the carbides in microstructure and reducing the segregation of the constituent elements to the smallest possible amount, it is possible for the method of the present invention to improve the high-alloy high speed tool steel in both toughness and cutting ability.

As described above, in each of the method of the present invention and the tool steel material of the present invention thus produced by the method of the present invention, it is possible to realize a desired tool steel material at low cost by using the conventional cast steel pieces, wherein the desired tool steel material is substantially equivalent in performance to the sintered tool steel which is produced by using the conventional powder metallurgy techniques and is therefore relatively expensive. Due to this, the method of the present invention may contribute to the development of industry.

Finally, the present application claims the Convention Priority based on Japanese Patent Application No. 2001-372117 filed on December 6, 2001, which is herein incorporated by reference.

## Claims

1. A method for producing a tool steel material comprising the steps of:
stacking a plurality of cast steel pieces into a lamination pack; and
processing said lamination pack by a pressure-hot-working process to have said cast steel pieces press-bonded to each other and unified in said lamination pack.

2. The method for producing the tool steel material as set forth in claim 1, wherein:
the number of said cast steel pieces in said lamination pack is equal to or more than 5; and
a forging ratio of said lamination pack to a product of the tool steel material is equal to or more than 20.

3. The method for producing the tool steel material as set forth in claim 1, wherein:
the number of said pressure-hot-working processes, to which said lamination pack is subjected, is equal to or more than 2; and
a heat treatment for enhancing diffusion of constituent elements of the tool steel material is conducted between adjacent ones of said pressure-hot-working processes, wherein said heat treatment enables said constituent elements to pass through a contact surface of each of said cast steel pieces and diffuse throughout said lamination pack, adjacent ones of said cast steel pieces being brought into contact with each other through said contact surface in said lamination pack.

4. The method for producing the tool steel material as set forth in any one of claims 1 to 3, wherein a sulfur content in the tool steel material is more than 0.03 mass %.

5. The method for producing the tool steel material as set forth in any one of claims 1 to 3, wherein each of said cast steel pieces of said lamination pack is constructed of a piece of a steel strip having continuously been cast by a continuous steel casting process.

6. The method for producing the tool steel material as set forth in any one of claims 1 to 3, wherein the tool steel material is a high speed tool steel.

7. A tool steel material produced by: stacking a plurality of cast steel pieces into a lamination pack; and, processing said lamination pack by a pressure-hot-working process to have said cast steel pieces press-bonded to each other and unified in said lamination pack.

8. The tool steel material as set forth in claim 7, wherein:
the number of said cast steel pieces in said lamination pack is equal to or more than 5; and
a forging ratio of said lamination pack to a product of the tool steel material is equal to or more than 20.

9. The tool steel material as set forth in claim 7, wherein:
the number of said pressure-hot-working processes, to which said lamination pack is subjected, is equal to or more than 2; and
a heat treatment for enhancing diffusion of constituent elements of the tool steel material is conducted between adjacent ones of said pressure-hot-working processes, wherein said heat treatment enables said constituent elements to pass through a contact surface of each of said cast steel pieces and diffuse throughout said lamination pack, adjacent ones of said cast steel pieces being brought into contact with each other through said contact surface in said lamination pack.

10. The tool steel material as set forth in any one of claims 7 to 9, wherein a sulfur content in the tool steel material is more than 0.03 mass %.

11. The tool steel material as set forth in any one of claims 7 to 9, wherein each of said cast steel pieces of said lamination pack is constructed of a piece of a steel strip having continuously been cast by a continuous steel casting process.

12. The tool steel material as set forth in any one of claims 7 to 9, wherein the tool steel material is a high speed tool steel.
